(19) **Europäisches Patentamt European Patent Office Office européen des brevets**

(11) **EP 2 917 996 B1**

(12) **FASCICULE DE BREVET EUROPEEN**

(45) Date de publication et mention
de la délivrance du brevet:
**06.06.2018 Bulletin 2018/23**

(21) Numéro de dépôt: **13789242.8**

(22) Date de dépôt: **05.11.2013**

(51) Int Cl.:
*H02J 15/00* (2006.01)   *H02J 3/28* (2006.01)

(86) Numéro de dépôt international:
**PCT/EP2013/073025**

(87) Numéro de publication internationale:
**WO 2014/072278 (15.05.2014 Gazette 2014/20)**

(54) **PROCEDE DE GESTION D'ENERGIE PERMETTANT UNE REPARTITION DE L'ENERGIE ENTRE UN RESEAU ELECTRIQUE ET UN SYSTEME DE TRAITEMENT NOTAMMENT DESTINE A STOCKER DE L'ENERGIE**

VERFAHREN ZUR ENERGIEVERWALTUNG ZUR ENERGIEVERTEILUNG ZWISCHEN EINEM STROMNETZ UND EINEM VERARBEITUNGSSYSTEM, INSBESONDERE ZUR SPEICHERUNG DER ENERGIE

METHOD FOR MANAGING ENERGY ENABLING ENERGY TO BE DISTRIBUTED BETWEEN A POWER GRID AND A PROCESSING SYSTEM INTENDED IN PARTICULAR FOR STORING THE ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2012 FR 1260657**

(43) Date de publication de la demande:
**16.09.2015 Bulletin 2015/38**

(73) Titulaire: **Commissariat à l'Énergie Atomique et aux Énergies Alternatives 75015 Paris (FR)**

(72) Inventeurs:
• **BOURASSEAU, Cyril F-38000 Grenoble (FR)**
• **GUINOT, Benjamin F-38210 Montaud (FR)**
• **MONTIGNAC, Florent F-38000 Grenoble (FR)**
• **MUTKA, Timo F-38000 Grenoble (FR)**

(74) Mandataire: **Novaimo ActiTech 8 60 avenue Marie Curie Archamps Technopole 74166 Saint Julien-en-Genevois Cedex (FR)**

(56) Documents cités:
**WO-A1-2010/048706   WO-A1-2011/055218 WO-A2-2009/019159   US-A1- 2003 227 276 US-A1- 2005 225 090   US-A1- 2009 048 716**

## Description

### Domaine technique de l'invention

L'invention concerne le domaine de la gestion de l'énergie.

L'invention a pour objet plus particulièrement un procédé de gestion permettant la distribution d'une énergie sur un réseau électrique et/ou un système de traitement configuré de sorte à stocker ladite énergie dans un réservoir.

### État de la technique

Les sources d'énergies renouvelables sont de plus en plus exploitées à des fins de génération d'électricité.

Par « source d'énergie renouvelable », on entend une source d'énergie dont le fonctionnement peut être intermittent en fonction des aléas de la nature. Il en résulte une difficulté d'exploitation d'une telle source. L'énergie électrique issue d'une telle source d'énergie renouvelable est destinée à être injectée/insérée dans un réseau électrique. Des études montrent que cette imprévisibilité du fonctionnement de l'énergie renouvelable limite le taux d'insertion possible de cette dernière sur le réseau électrique actuel. En effet, une injection importante d'électricité sur le réseau électrique à un instant où la consommation à partir dudit réseau est faible peut remettre en cause la sécurité du réseau.

Aujourd'hui, il est possible pour un exploitant d'une source d'énergie renouvelable d'injecter sa production d'électricité sans contraintes sur le réseau (les importantes variations de puissance injectée sont autorisées). Ceci est possible car la puissance de la source d'énergie renouvelable globale installée est relativement faible par rapport à la puissance installée des technologies conventionnelles (centrales nucléaires, centrales à gaz, etc.).

Le document US7444189 décrit une source d'énergie renouvelable reliée d'une part à un réseau électrique d'un bâtiment et d'autre part à un électrolyseur configuré pour stocker de l'hydrogène en vue de son utilisation dans une pile à combustible. La pile à combustible permet de fournir du courant à partir de l'hydrogène stocké. La répartition de l'énergie issue de la source d'énergie renouvelable est réalisée de sorte à minimiser les coûts selon les besoins d'une installation.

US2009048716 divulgue un procédé de gestion d'énergie comportant une étape de récupération d'une énergie électrique issue d'une source d'énergie, notamment d'une source d'énergie renouvelable, une étape de distribution de L'énergie électrique récupérée configurée pour être pilotée de sorte à, dans une première configuration, injecter au moins en partie l'énergie électrique récupérée dans un réseau électrique et dans une deuxième configuration, injecter au moins en partie l'énergie électrique récupérée dans un système de traitement configure de sorte à la Stocker dans un réservoir.

### Objet de l'invention

Le but de la présente invention est de proposer une solution permettant d'optimiser la répartition d'une énergie électrique et le stockage d'une partie de cette énergie, notamment sous forme d'un produit à base d'hydrogène.

L'invention est dirigée vers un procédé de gestion selon la revendication de procédé 1, et vers le dispositif correspondant selon la revendication 12. Selon la revendication 15, la portée de l'invention inclut également un support d'enregistrement de données lisible par un calculateur, sur lequel est enregistré un programme informatique comprenant des moyens de codes de programme informatique de mise en oeuvre dudit procédé.

On tend vers ce but en ce que le procédé de gestion d'énergie comporte : une étape de récupération d'une énergie électrique issue d'une source d'énergie, notamment d'une source d'énergie renouvelable ; une étape de distribution de l'énergie électrique récupérée configurée pour être pilotée de sorte à dans une première configuration, injecter au moins en partie l'énergie électrique récupérée dans un réseau électrique et dans une deuxième configuration, injecter au moins en partie l'énergie électrique récupérée dans un système de traitement configuré de sorte à la stocker dans un réservoir ; et en ce qu"il comporte une étape de pilotage de la distribution de l'énergie électrique comprenant une étape de détermination d'un état de stockage du réservoir et une étape de détermination d'un délai de fourniture d'au moins une partie prédéterminée du contenu du réservoir.

Selon un mode d'exécution, le procédé comporte une étape de transformation d'au moins une partie de l'énergie électrique injectée dans le système de traitement en un produit à stocker dans le réservoir, et il comporte une étape de stockage du produit dans le réservoir.

Avantageusement, l'étape de transformation comporte une étape d'alimentation électrique d'un électrolyseur du système de traitement par toute ou partie de l'énergie électrique injectée dans le système de traitement de sorte à générer le produit comportant de l'hydrogène.

De préférence, l'étape de pilotage comporte une étape de détermination de contraintes de distribution d'énergie sur le réseau électrique.

Selon une mise en oeuvre, l'étape de pilotage comporte : une étape de détermination d'un premier indicateur à partir de l'état de stockage déterminé et du délai de fourniture déterminé ;une étape de détermination d'un deuxième indicateur à partir des contraintes de distribution déterminées ; une étape de comparaison du premier indicateur avec le deuxième indicateur ; et une étape de détermination de consignes pour le pilotage de la distribution de l'énergie électrique récupérée à partir du résultat de la comparaison.

Par exemple, le premier indicateur est égal à la formule suivante :

$$\sqrt{1 - TTD^2} \times (1 - SOC) + \left(1 - \sqrt{1 - (1 - TTD)^2}\right) \times SOC$$ avec TTD le délai de fourniture déterminé variant entre la valeur 0, lorsque le délai de fourniture a expiré, et la valeur 1 lorsque le réservoir vient d'être vidé ou remplacé, et SOC l'état de stockage du réservoir variant entre 0, lorsque le réservoir est vide, et 1 lorsque le réservoir est plein.

Avantageusement, l'étape de pilotage est réalisée de manière continue de sorte à ajuster le fonctionnement de l'étape de distribution au cours du temps.

Selon une réalisation, le procédé comporte une étape de stockage dans une batterie d'au moins une partie de l'énergie injectée dans le système de traitement.

Avantageusement, le procédé comporte une étape de production d'électricité par une pile à combustible utilisant le contenu du réservoir en tant que combustible.

Le procédé peut en outre comporte une étape de livraison de ladite au moins une partie prédéterminée du contenu du réservoir à l'expiration dudit délai de fourniture déterminé.

Avantageusement, fonction d'une période restante avant l'expiration du délai de fourniture déterminé et de l'état de stockage déterminé du réservoir, l'étape de pilotage est configurée de sorte que le remplissage du réservoir soit réalisé au cours de la période restante selon une méthode choisie parmi : un remplissage linéaire, un remplissage non linéaire, un remplissage en début de la période restante, un remplissage en fin de la période restante, ou un remplissage de manière intermittente.

L'invention est aussi relative à un dispositif de gestion d'énergie comprenant : un élément de récupération d'une énergie électrique issue d'une source d'énergie, notamment d'une source d'énergie renouvelable ; un élément de distribution de l'énergie électrique récupérée configuré de sorte à présenter une première configuration dans laquelle au moins une partie de l'énergie électrique récupérée est injectée dans un réseau électrique et une deuxième configuration dans laquelle au moins une partie de l'énergie électrique récupérée est injectée dans un système de traitement destiné à la stocker dans un réservoir de stockage ; et un élément de pilotage de la distribution de l'énergie électrique comprenant un élément de détermination d'un état de stockage du réservoir et un élément de détermination d'un délai de fourniture d'au moins une partie du contenu du réservoir.

Avantageusement, le système de traitement comporte un électrolyseur alimenté par l'énergie injectée dans ledit système de traitement afin de stocker ladite énergie injectée sous forme d'un produit comportant de l'hydrogène.

Par ailleurs, le dispositif peut comporter un calculateur configuré pour réaliser des étapes du procédé tel que décrit.

L'invention est aussi relative à un support d'enregistrement de données lisible par un calculateur, sur lequel est enregistré un programme informatique comprenant des moyens de codes de programme informatique de mise en oeuvre des étapes du procédé décrit.

L'invention est aussi relative à un programme informatique comprenant un moyen de codes de programme informatique adapté à la réalisation des étapes d'un procédé tel que décrit, lorsque le programme est exécuté par un calculateur.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 illustre schématiquement des étapes d'un procédé selon une réalisation particulière de l'invention,
- la figure 2 illustre une installation complète apte à mettre en oeuvre le procédé de la figure 1,
- la figure 3 illustre une représentation graphique de la valeur d'un indicateur en fonction de l'état de stockage et du délai de fourniture,
- la figure 4 illustre différentes stratégies de remplissage d'un réservoir au cours d'une période,
- la figure 5 illustre un dispositif configuré pour mettre en oeuvre des étapes du procédé de gestion.

**EP 2 917 996 B1**

**Description de modes préférentiels de l'invention**

Le procédé décrit ci-après diffère de l'art antérieur notamment par sa gestion de la répartition de l'énergie issue d'une source d'énergie, en particulier une source d'énergie renouvelable.

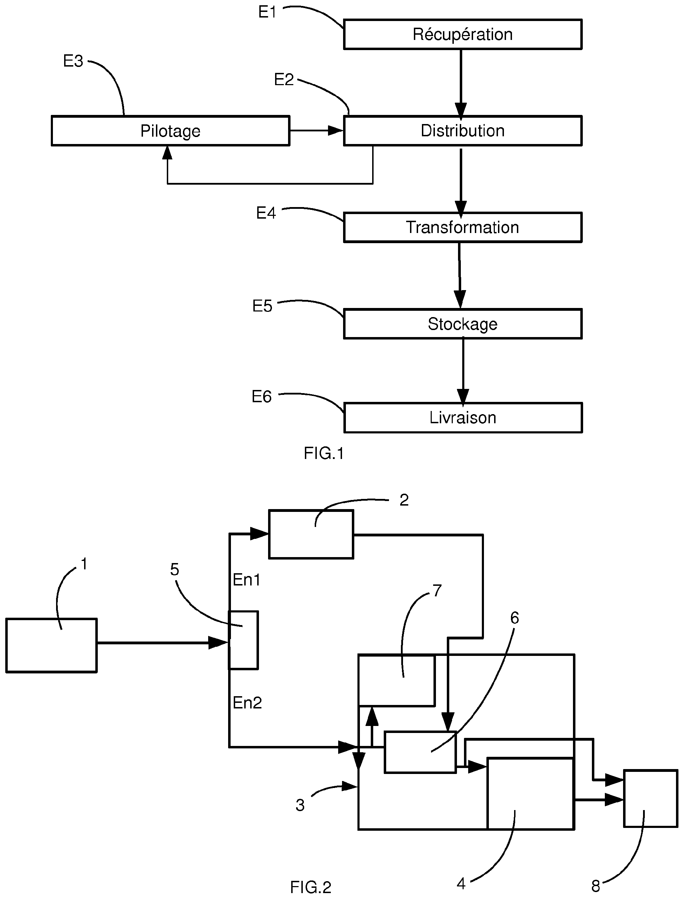

Ainsi, comme illustré aux figures 1 et 2, le procédé de gestion d'énergie peut comporter une étape de récupération E1 d'une énergie électrique issue d'une source d'énergie 1, notamment d'une source d'énergie renouvelable. Cette énergie électrique peut être issue d'une source d'énergie renouvelable comme par exemple l'énergie solaire, l'énergie éolienne, ou l'énergie hydraulique et être respectivement générée par un module photovoltaïque, une éolienne ou un barrage hydraulique transformant l'énergie de ladite source d'énergie renouvelable en électricité. Le procédé comporte aussi une étape de distribution E2 de l'énergie électrique récupérée configurée pour être pilotée de sorte à, dans une première configuration, injecter au moins en partie En1 l'énergie électrique récupérée dans un réseau électrique 2. Cette étape de distribution de l'énergie électrique récupérée peut aussi être configurée de sorte à, dans une deuxième configuration, injecter au moins en partie En2 l'énergie électrique récupérée dans un système de traitement 3 configuré de sorte à la stocker dans un réservoir 4. En fait, la notion de « distribution » est utilisée dans le cadre du procédé pour permettre un arbitrage entre une injection dans le réseau électrique 2 et une alimentation du système de traitement 3.

Par définition un réseau électrique 2 peut être considéré comme un ensemble d'infrastructures permettant d'acheminer une énergie électrique de centres de production vers des consommateurs d'électricité. Afin d'être stable, un tel réseau électrique doit recevoir autant d'électricité qu'il doit en fournir. En fait, si la production est différente de la consommation, il se produit alors un changement de fréquence du réseau, ceci pouvant endommager l'ensemble des équipements électriques connectés audit réseau.

En fait, dans la première configuration toute l'énergie électrique récupérée peut être injectée En1 dans le réseau électrique 2, ou l'énergie électrique récupérée peut être répartie intégralement entre le réseau électrique 2 et le système de traitement 3. Il en va de même pour la deuxième configuration où toute l'énergie électrique récupérée peut être injectée En2 dans le système de traitement 3, ou l'énergie électrique récupérée peut être répartie intégralement entre le réseau électrique 2 et le système de traitement 3. La répartition peut être réalisée par un élément de répartition 5.

En outre, le procédé comporte une étape de pilotage E3 de la distribution de l'énergie électrique E2 comprenant une étape de détermination d'un état de stockage du réservoir 4 et une étape de détermination d'un délai de fourniture (aussi appelé délai de livraison) d'au moins une partie prédéterminée du contenu du réservoir 4. A partir de ces données déterminées d'état de stockage et de délai de fourniture, l'étape de pilotage E3 peut doser l'injection d'électricité dans le réseau électrique 2 et/ou dans le système de traitement 3.

Par « stockage dans un réservoir », on entend un stockage sous tout type de forme possible. Ainsi, l'énergie électrique peut être stockée dans une batterie formant réservoir, ou être transformée pour être stockée dans son état transformé. Autrement dit, le procédé peut préférentiellement comporter une étape de transformation E4 d'au moins une partie de l'énergie électrique injectée dans le système de traitement 3 (de préférence toute l'énergie électrique injectée dans le système de traitement 3 est transformée) en un produit à stocker dans le réservoir 4, et une étape de stockage E5 du produit dans le réservoir 4.

Par « délai de fourniture », on entend un délai, qui lorsqu'il vient à expiration, provoque la livraison d'une quantité prédéterminée du réservoir. Autrement dit, ce délai de fourniture est une contrainte provoquant une obligation de livraison du contenu du réservoir à une date donnée. De préférence, la quantité prédéterminée correspond à la capacité totale du réservoir ou à tout ce qui est présent dans le réservoir, par exemple par une livraison du réservoir 4 lui-même. On comprend alors que, dans ce cas particulier, l'étape de pilotage E3 va permettre d'assurer qu'à la fin du délai de fourniture le réservoir sera plein. Pour cela il sera possible d'utiliser un indicateur de l'état de stockage du réservoir, telle une jauge.

Selon un exemple non limitatif, l'état de stockage du réservoir 4 ne diminue qu'au moment de l'expiration du délai de fourniture. Autrement dit, au cours d'une période dite de remplissage séparant deux livraisons consécutives chacune associée à un délai de fourniture, aucun prélèvement du contenu du réservoir, ou du réservoir lui-même, n'est réalisé.

L'étape de pilotage E3 peut aussi comporter une étape de détermination de la quantité d'énergie récupérée, c'est-à-dire la quantité d'énergie produite à partir de la source d'énergie renouvelable sur une période donné ou par exemple une puissance à un instant « t », ceci permettant de piloter à chaque instant « t » la distribution de l'énergie électrique réellement récupérée.

Avantageusement, le produit stocké comporte de l'hydrogène. Un tel produit est destiné à être utilisé pour faire, par exemple, fonctionner une pile à combustible en vue de restituer de l'électricité. Ainsi, l'étape de transformation E4 peut comporter une étape d'alimentation électrique d'un électrolyseur 6 du système de traitement 3 par toute ou partie de l'énergie électrique injectée dans le système de traitement 3 de sorte à générer le produit comportant de l'hydrogène. Le fonctionnement d'un électrolyseur 6 pour former un produit comportant de l'hydrogène, par exemple un gaz de dihydrogène, notamment à partir d'eau, ne sera pas décrit ici car bien connu de l'homme du métier. En fait, l'étape de transformation peut aussi être mise en oeuvre par l'alimentation électrique d'une pluralité d'électrolyseurs. Le ou les électrolyseurs peuvent être de technologie alcaline ou PEM (pour membrane à échange de protons soit « proton ex-

**4**

change membrane » en anglais) ou EHT (pour électrolyse haute température). Par ailleurs, le stockage de l'hydrogène peut être réalisé sous différente forme (pression, liquide, hydrures, matériaux adsorbants, ou mix de ces technologies).

Comme indiqué dans l'art antérieur, à ce jour il est commun pour un exploitant d'une source d'énergie renouvelable d'injecter sa production sans contraintes sur le réseau électrique 2. Cependant, l'augmentation de la part des énergies renouvelables 1 dans le mix énergétique peut nécessiter soit d'adapter le réseau électrique 2 à ces productions intermittentes que sont les énergies renouvelables, soit de contraindre les producteurs à piloter leurs injections en fonction des possibilités offertes par le réseau au moment de l'injection. On comprend donc, qu'en fonction du type du réseau électrique, il peut être avantageux d'injecter du courant dans ce dernier que sous certaines contraintes. Ces contraintes peuvent, à titre d'exemple, être une quantité à injecter sur laquelle on s'est engagé (par exemple respecter un profil d'injection donné en puissance et en quantité d'énergie), le prix que rapporte l'injection d'électricité sur le réseau électrique, respecter un pourcentage total d'énergie issue de source(s) d'énergie renouvelable au sein du réseau électrique, assurer un service en particulier, ou un mix de ces contraintes, etc. Ainsi préférentiellement, l'étape de pilotage comporte une étape de détermination de contraintes de distribution d'énergie sur le réseau électrique 2. Ces contraintes à déterminer peuvent être, par exemple, stockées dans une table de caractérisation de l'installation associée au procédé de gestion, fournies en temps réel par l'exploitant du réseau électrique 2, etc.

Afin d'optimiser le pilotage E3 de la distribution E2, l'étape de pilotage E2 peut comporter une étape de détermination d'un premier indicateur à partir de l'état de stockage déterminé et du délai de fourniture déterminé. Par ailleurs, l'étape de pilotage E2 peut aussi comporter une étape de détermination d'un deuxième indicateur à partir des contraintes de distribution déterminées. Une étape de comparaison du premier indicateur avec le deuxième indicateur permet à l'étape de pilotage E2 de déterminer, lors d'une étape associée, des consignes pour le pilotage de la distribution de l'énergie électrique récupérée à partir du résultat de la comparaison.

On comprend de ce qui a été dit ci-dessus que l'homme du métier devra générer des indicateurs comparables.

A titre d'exemple, le premier indicateur est égal à la formule suivante :

$$\sqrt{1 - TTD^2} \times (1 - SOC) + \left(1 - \sqrt{1 - (1 - TTD)^2}\right) \times SOC$$ avec TTD le délai de fourniture déterminé pour « time to delivery » en anglais et SOC l'état de stockage du réservoir (pour « state of charge » en anglais). SOC peut prendre la valeur 0 ou 0% lorsque le stockage est vide et la valeur 1 ou 100% lorsque ce dernier est plein ou atteint le niveau de remplissage convenu. L'indicateur SOC évolue de manière croissante au fur et à mesure du remplissage du stockage (de 0 à 1). TTD peut prendre la valeur 0 lorsque la date et l'heure de livraison sont atteintes et la valeur 1 lorsque le stockage vient d'être vidé ou remplacé et que le système est en attente de la prochaine livraison. L'indicateur TTD peut évoluer de manière linéairement décroissante avec le temps entre deux livraisons (de 1 à 0). Il est à noter qu'immédiatement après la livraison, l'indicateur SOC du stockage prend la valeur 0. Autrement dit, le délai de fourniture TTD déterminé peut varier entre la valeur 0, lorsque le délai de fourniture a expiré, et la valeur 1 lorsque le réservoir vient d'être vidé ou remplacé, et SOC l'état de stockage du réservoir peut varier entre 0, lorsque le réservoir est vide, et 1 lorsque le réservoir est plein. Ce premier indicateur est simple à mettre en oeuvre dans le sens où les équipements de mesure des paramètres permettant de le déterminer sont facilement disponibles. De plus, l'évaluation par cet indicateur est rapide.

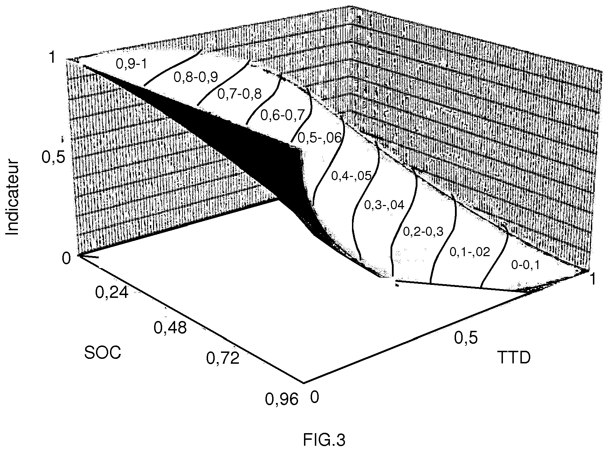

La figure 3 représente graphiquement la fonction de l'indicateur variant de 0 à 1 à partir de la formule ci-dessus, avec SOC variant de 0% à 100% et TTD variant de 0 à 1. La représentation graphique montre que l'indicateur calculé à partir de cette fonction prend la valeur 1 quand le stockage est vide (SOC=0%) ou quand on s'approche de la date de livraison (TTD=0). Ainsi, plus l'indicateur concerné sera proche de 1, plus l'étape de pilotage aura tendance à favoriser l'injection d'électricité vers le système de traitement 3.

Toujours à titre d'exemple, le deuxième indicateur peut traduire le besoin du réseau électrique 2 de recevoir une injection d'électricité. Cet indicateur peut être noté NEI (pour l'anglais « Need for Electrical Injection » soit besoin en injection électrique) qui prend la valeur 0 lorsque le réseau ne souhaite pas recevoir d'avantage d'injection et 1 dans le cas contraire extrême. Le besoin d'injection d'électricité peut être linéaire entre ces deux valeurs. Cet indicateur peut être soit connu, soit fourni par un autre algorithme de calcul. Les informations des acteurs du réseau électrique peuvent être de natures différentes (selon les acteurs) et peuvent traduire des besoins techniques, économiques et/ou environnementaux.

L'ensemble des informations reçues, traduites en indicateurs, sont ensuite confrontées par l'algorithme, notamment par l'étape de comparaison, afin de déterminer par la suite un mode de fonctionnement à l'instant « t » permettant l'optimisation de la distribution (par exemple assurer le remplissage des réservoirs d'hydrogène pour respecter les contraintes de livraison en délai et en volume, et suivre au plus près les besoins du réseau en injection supplémentaire). Comme évoqué ci-dessus, le mode de fonctionnement peut être choisi à partir de trois configurations possibles choisies parmi : 100% de l'énergie produite par la source est injecté vers le réseau électrique 2; 100% de l'énergie produite par la source est injecté vers le système de traitement 3 (notamment de sorte à être utilisé pour produire du dihydrogène) ; un mix des deux configurations susmentionnées.

Les besoins en électricité du réseau électrique 2 ou du système de traitement 3 peuvent varier dans le temps. Il en résulte donc un besoin d'adaptation du pilotage au cours du temps. Pour répondre à cette problématique, l'étape de pilotage E3 peut être réalisée de manière continue ou périodique de sorte à ajuster le fonctionnement de l'étape de distribution E2 au cours du temps. En fait, selon une réalisation particulière, le pas de temps ou de période est de 1 minute mais peut aussi varier de la seconde à l'heure, on comprend donc que le pas sera adapté en fonction de l'application. Les calculs et la comparaison des indicateurs peuvent en effet être réalisés à intervalles réguliers (à chaque pas de temps). De manière préférentielle, à chaque pas de temps il est réalisé l'acquisition de données permettant un pilotage optimisé : un calcul du SOC et du TTD, un calcul du premier indicateur fonction des deux variables SOC et TTD calculées, un calcul du deuxième l'indicateur fonction des contraintes et obligations du réseau, une comparaison des premier et deuxième indicateurs, et enfin un établissement de consignes de fonctionnement pour le pilotage de la distribution (en tenant compte des contraintes physique, techniques ou de sécurité du système).

Selon une mise en oeuvre pouvant être combinée avec tout ce qui a été dit ci-dessus, le procédé peut comporter une étape de stockage, dans une batterie 7, d'au moins une partie de l'énergie injectée dans le système de traitement 3. Cette batterie 7 peut être le réservoir visé ci-dessus ou être indépendante du réservoir 4.

Le procédé peut aussi comporter une étape de production d'électricité par une pile à combustible 8 utilisant le contenu du réservoir 4 en tant que combustible.

Une fraction du produit peut être optionnellement consommée directement sans stockage. Par exemple, en sortie de l'électrolyseur 6 le produit généré peut être directement utilisé pour alimenter une pile à combustible 8 (figure 2) ou autre.

Le procédé comporte avantageusement une étape de livraison E6 de ladite au moins une partie prédéterminée du contenu du réservoir 4 à l'expiration dudit délai de fourniture déterminé. De préférence, comme évoqué précédemment, à l'expiration du délai de fourniture la livraison consiste à livrer tout le contenu du réservoir, par exemple en le vidant totalement ou en le remplaçant par un réservoir vide et en déplaçant le réservoir remplacé.

Selon une variante, l'étape de pilotage E2 est réalisée de sorte qu'à l'expiration du délai le réservoir soit plein ou que son état de stockage soit compris dans une plage prédéterminée conformément à une demande d'une entité susceptible d'utiliser le contenu du réservoir par exemple l'hydrogène.

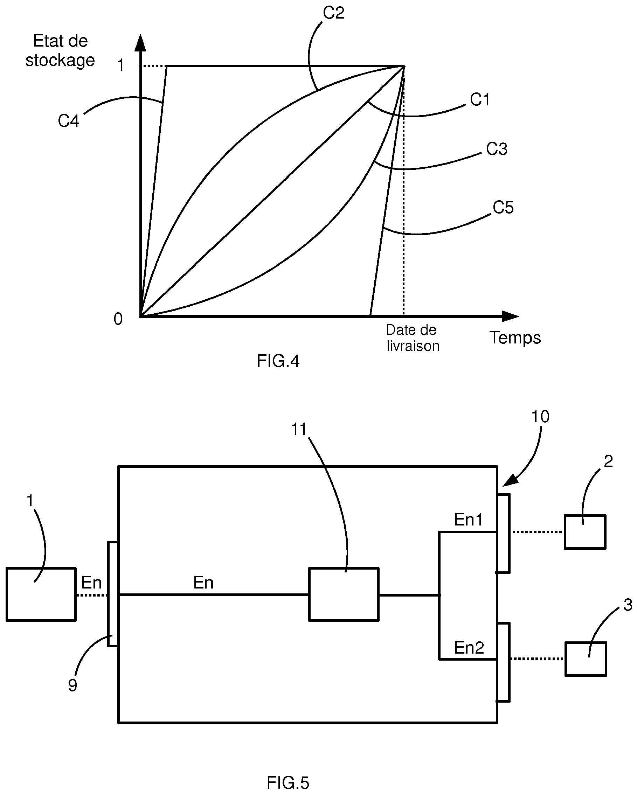

Différentes stratégies de pilotage pourront être mises en oeuvre. Par exemple, en fonction d'une période restante avant l'expiration du délai de fourniture déterminé et de l'état de stockage déterminé (correspondant de préférence à l'état de stockage courant du réservoir par exemple mesuré à l'aide d'une jauge) du réservoir 4, l'étape de pilotage E3 peut être configurée de sorte que le remplissage du réservoir 4 soit réalisé au cours de la période restante selon une méthode choisie parmi : un remplissage linéaire (notamment sur toute la période), un remplissage non linéaire (notamment sur toute la période), un remplissage en début de la période restante, un remplissage en fin de la période restante, ou un remplissage de manière intermittente. Par « un remplissage en début de la période restante ou en fin de la période restante », on entend par exemple que la période restante est divisée en au moins deux laps de temps, un premier laps de temps au cours duquel la totalité, ou la majorité, de l'énergie récupérée est injectée dans le réseau électrique 2 et un deuxième laps de temps au cours duquel la totalité, ou la majorité, de l'énergie récupérée est injectée dans le système de traitement 3. En fait, le remplissage peut être fait de toutes les manières possibles notamment de façon intermittente, la figure 4 n'illustre que quelques possibilités accessibles par l'homme du métier qui pourra en dériver, ou en optimiser, d'autres selon des algorithmes différents.

Ces stratégies sont illustrées à titre d'exemple à la figure 4, le temps entre 0 et « Date de livraison » correspond alors à la période restante et l'état de stockage à 1 correspond à un réservoir plein. La courbe C1 représente le cas où le remplissage est linéaire, les courbes C2 et C3 représentent le cas où le remplissage est non linéaire, et les courbes C4 et C5 représentent le cas où le remplissage a lieu respectivement en début de la période restante et en fin de la période restante.

Ces différentes stratégies ont chacune leurs avantages mais ne permettent pas forcément de respecter l'ensemble des contraintes appliquées à un système donné. Par exemple, si l'on décide de remplir le réservoir au dernier moment (juste avant la date de livraison), le risque est pris de ne plus avoir assez d'électricité disponible pour remplir complètement le stockage (c'est-à-dire le réservoir 4) en cas de contrainte forte du réseau électrique ou en cas d'indisponibilité de la ressource renouvelable. A l'inverse, si l'on remplit très rapidement le stockage, on privilégie fortement l'hydrogène, au risque, lors de cette phase de remplissage, de ne pas respecter des obligations et contraintes liées au réseau électrique 2.

Afin de pallier à certains « creux de fonctionnement » de la source d'énergie, l'électrolyseur 6 peut aussi être configuré pour être relié électriquement au réseau électrique 2 (figure 2). Autrement dit, le procédé peut comporter une étape d'alimentation électrique de l'électrolyseur 6 par le réseau électrique 2 pour former le produit comportant de l'hydrogène. Cette stratégie pourra être mise en oeuvre par exemple en cas de dernier recours lorsque le réservoir 4 n'est pas plein, ou que son état de stockage est inférieur à un seuil associé, et que la période restante avant l'expiration du délai de fourniture est inférieure à un seuil temporel associé. Par exemple, cette stratégie peut être privilégiée si on se trouve dans le cas des courbes C3 et C5 de la figure 4.

Bien que le procédé ait été décrit sur la base de la récupération d'énergie à partir d'une source d'énergie, de préférence renouvelable, il peut aussi prendre en compte plusieurs sources d'énergies renouvelables, plusieurs réseaux électriques et plusieurs systèmes de traitement, par exemple disséminés sur plusieurs sites. Dès lors, il est possible de gérer chacun des sites indépendamment à partir de contraintes, par exemple de livraison, différentes. Bien entendu, l'ensemble des sites peut aussi devoir répondre à un même besoin de réseau électrique, et donc les sites peuvent ne pas être complètement indépendants.

De manière générale, il est aussi possible de prévoir une étape de demande de validation par un opérateur de la stratégie de pilotage de la distribution d'énergie récupérée mise en oeuvre par l'étape de pilotage. Ceci permet d'assurer un contrôle supplémentaire quant à la stratégie.

Par ailleurs, l'étape de pilotage E3 peut aussi gérer la distribution en prenant en compte le coût d'approvisionnement en hydrogène, le prix de revente de l'hydrogène, le prix de revente sur le réseau électrique de l'énergie récupérée, etc.

Le procédé tel que décrit revêt de nombreux avantages, notamment en fonction des réalisations décrites ci-avant, il permet : un arbitrage permanent de différentes utilisations de l'électricité issue de la source d'énergie renouvelable entre le réseau électrique et le système de traitement ; la prise en compte de contraintes et obligations liées à la production du produit comportant de l'hydrogène et de contraintes et obligations liées à l'injection d'électricité sur le réseau électrique ; la prise en compte de paramètres liés au stockage du produit comportant de l'hydrogène ; une utilisation de l'intégralité de la production d'électricité issue de la source d'énergie renouvelable (si le réseau ne peut pas accueillir la production à un instant « t », alors la voie production de dihydrogène sera choisie) ; la production d'un hydrogène décarboné ; l'injection d'électricité sur le réseau aux moments où ce dernier la nécessite le plus.

L'invention est aussi relative à un dispositif tel qu'illustré à la figure 5. Un tel dispositif de gestion d'énergie comprend un élément de récupération 9 d'une énergie électrique En issue d'une source d'énergie 1, notamment d'une source d'énergie renouvelable ; un élément de distribution 10 de l'énergie électrique récupérée configuré de sorte à présenter :

○ une première configuration dans laquelle au moins une partie En1 de l'énergie électrique récupérée En est injectée dans le réseau électrique 2,

○ une deuxième configuration dans laquelle au moins une partie En2 de l'énergie électrique récupérée En est injectée dans un système de traitement 3 destiné/configuré de sorte à la stocker dans un réservoir de stockage.

En outre, un tel dispositif comporte un élément de pilotage 11 de la distribution de l'énergie électrique comprenant un élément de détermination d'un état de stockage du réservoir et un élément de détermination d'un délai de fourniture d'au moins une partie du contenu du réservoir.

Il est entendu que le système de traitement 3, la source d'énergie 1 et le réseau électrique 2 peuvent faire partie intégrante du dispositif.

Ainsi, lorsque le dispositif comporte le système de traitement, ce dernier peut comporter un electrolyseur alimenté par l'énergie injectée dans ledit système de traitement 3 afin de stocker ladite énergie injectée sous forme d'un produit comportant de l'hydrogène.

Alternativement, le dispositif peut ne pas comporter le système de traitement 3, la source d'énergie 1 et le réseau électrique 2. Dans ce cas le dispositif peut comporter des organes de connexions aptes à être reliés respectivement au système de traitement 3, à la source d'énergie 1 et au réseau électrique 2. Par ailleurs, le dispositif comporte alors une première interface destinée à être reliée au réservoir 4, par exemple une jauge du réservoir 4.

Le délai de fourniture peut être programmé à distance, ou correspondre à un cycle prédéterminé.

On comprend que chaque étape du procédé tel que décrit précédemment peut être réalisée par un élément particulier comprenant les moyens logiciels et/ou matériels nécessaires à la mise en oeuvre de l'étape concernée.

Le dispositif peut comporter un calculateur configuré pour réaliser des étapes du procédé tel que décrit. Un tel calculateur peut être interfacé avec les éléments du dispositif décrits ci-avant de sorte à réaliser le procédé.

L'invention est aussi relative à un support d'enregistrement de données lisible par un calculateur, sur lequel est enregistré un programme informatique comprenant des moyens de codes de programme informatique de mise en oeuvre des étapes d'un procédé de gestion tel que décrit dans ses différentes variantes et mises en oeuvre.

L'invention est aussi relative à un programme informatique comprenant un moyen de codes de programme informatique adapté à la réalisation des étapes du procédé de gestion tel que décrit dans ses différentes variantes et mises en oeuvre, en particulier lorsque le programme est exécuté par un calculateur.

Dans la présente description, il est fait référence à un produit à base d'hydrogène ou contenant de l'hydrogène, notamment destiné à être stocké dans le réservoir. Ce produit est préférentiellement du dihydrogène $H_2$. Cependant, d'autres composés chimiques pourraient être envisagés pour le stockage mais nécessiteraient une transformation supplémentaire de dihydrogène (notamment issu de l'électrolyse) vers cet autre composé. On peut par exemple considérer des composés organiques (contenant une liaison C-H tels que le méthanol, le méthane, l'acide formique, le dimethylether) ou bien l'ammoniac ($NH_3$). Dans tous les cas, ces composés comportent des atomes d'hydrogène. Autrement dit, moyennant des transformations supplémentaires, l'hydrogène pourrait être stocké dans un composé chimique autre.

**Revendications**

1.  Procédé de gestion d'énergie comportant :

    - une étape de récupération (E1) d'une énergie électrique issue d'une source d'énergie (1), notamment d'une source d'énergie renouvelable,
    - une étape de distribution (E2) de l'énergie électrique récupérée configurée pour être pilotée de sorte à :

      ○ dans une première configuration, injecter au moins en partie l'énergie électrique récupérée dans un réseau électrique (2),
      ○ dans une deuxième configuration, injecter au moins en partie l'énergie électrique récupérée dans un système de traitement (3) configuré de sorte à la stocker dans un réservoir (4),

    **caractérisé en ce qu'**il comporte une étape de pilotage (E3) de la distribution de l'énergie électrique (E2) comprenant une étape de détermination d'un état de stockage du réservoir (4) et une étape de détermination d'un délai de fourniture provoquant la livraison d'au moins une partie prédéterminée du contenu du réservoir (4), l'étape de pilotage dosant l'injection d'électricité dans le réseau électrique (2) et/ou dans le système de traitement (3) à partir de ces déterminations d'un état de stockage du réservoir (4) et d'un délai de fourniture.

2.  Procédé selon la revendication 1, **caractérisé en ce qu'**il comporte une étape de transformation (E4) d'au moins une partie de l'énergie électrique injectée dans le système de traitement (3) en un produit à stocker dans le réservoir (4), et **en ce qu'**il comporte une étape de stockage (E5) du produit dans le réservoir (4).

3.  Procédé selon la revendication 2, **caractérisé en ce que** l'étape de transformation (E4) comporte une étape d'alimentation électrique d'un électrolyseur (6) du système de traitement (3) par toute ou partie de l'énergie électrique injectée dans le système de traitement (3) de sorte à générer le produit comportant de l'hydrogène.

4.  Procédé selon l'une des revendications 1 à 3, **caractérisé en ce que** l'étape de pilotage (E3) comporte une étape de détermination de contraintes de distribution d'énergie sur le réseau électrique (2).

5.  Procédé selon la revendication 4, **caractérisé en ce que** l'étape de pilotage (E3) comporte :

    - une étape de détermination d'un premier indicateur à partir de l'état de stockage déterminé et du délai de fourniture déterminé,
    - une étape de détermination d'un deuxième indicateur à partir des contraintes de distribution déterminées,
    - une étape de comparaison du premier indicateur avec le deuxième indicateur, et
    - une étape de détermination de consignes pour le pilotage de la distribution de l'énergie électrique récupérée à partir du résultat de la comparaison.

6.  Procédé selon la revendication précédente, **caractérisé en ce que** le premier indicateur est égal à la formule suivante : $\sqrt{1 - TTD^2} \times (1 - SOC) + \left(1 - \sqrt{1 - (1 - TTD)^2}\right) \times SOC$ avec TTD le délai de fourniture déterminé variant entre la valeur 0, lorsque le délai de fourniture a expiré, et la valeur 1 lorsque le réservoir vient d'être vidé ou remplacé, et SOC l'état de stockage du réservoir variant entre 0, lorsque le réservoir est vide, et 1 lorsque le réservoir est plein.

7.  Procédé selon l'une quelconque des revendications précédentes, caractérisé en que l'étape de pilotage (E3) est réalisée de manière continue de sorte à ajuster le fonctionnement de l'étape de distribution (E2) au cours du temps.

8.  Procédé selon l'une quelconque des revendications précédentes, **caractérisé en ce qu'**il comporte une étape de stockage dans une batterie (7) d'au moins une partie de l'énergie injectée dans le système de traitement (3).

**9.** Procédé selon la revendication 3, ou la revendication 3 et l'une quelconque des revendications 4 à 8, **caractérisé en ce qu'**il comporte une étape de production d'électricité par une pile à combustible (8) utilisant le contenu du réservoir (4) en tant que combustible.

**10.** Procédé selon l'une quelconque des revendications précédentes, **caractérisé en ce qu'**il comporte une étape de livraison (E6) de ladite au moins une partie prédéterminée du contenu du réservoir (4) à l'expiration dudit délai de fourniture déterminé.

**11.** Procédé selon l'une quelconque des revendications précédentes, **caractérisé en ce qu'**en fonction d'une période restante avant l'expiration du délai de fourniture déterminé et de l'état de stockage déterminé du réservoir (4), l'étape de pilotage (E3) est configurée de sorte que le remplissage du réservoir (4) soit réalisé au cours de la période restante selon une méthode choisie parmi : un remplissage linéaire, un remplissage non linéaire, un remplissage en début de la période restante, un remplissage en fin de la période restante, ou un remplissage de manière intermittente.

**12.** Dispositif de gestion d'énergie comprenant :

- un élément de récupération (9) d'une énergie électrique issue d'une source d'énergie (1), notamment d'une source d'énergie renouvelable,
- un élément de distribution (10) de l'énergie électrique récupérée configuré de sorte à présenter :

  ◦ une première configuration dans laquelle au moins une partie (En1) de l'énergie électrique récupérée (En) est injectée dans un réseau électrique (2),
  ◦ une deuxième configuration dans laquelle au moins une partie (En2) de l'énergie électrique (En) récupérée est injectée dans un système de traitement (3) destiné à la stocker dans un réservoir de stockage (4),

**caractérisé en ce qu'**il comporte un élément de pilotage (11) de la distribution de l'énergie électrique comprenant un élément de détermination d'un état de stockage du réservoir et un élément de détermination d'un délai de fourniture provoquant la livraison d'au moins une partie du contenu du réservoir, l'élément de pilotage (11) dosant l'injection d'électricité dans le réseau électrique (2) et/ou dans le système de traitement (3) à partir de ces déterminations d'un état de stockage du réservoir (4) et d'un délai de fourniture.

**13.** Dispositif selon la revendication précédente, **caractérisé en ce que** le système de traitement comporte un électrolyseur (6) alimenté par l'énergie injectée dans ledit système de traitement (3) afin de stocker ladite énergie injectée sous forme d'un produit comportant de l'hydrogène.

**14.** Dispositif selon l'une des revendications 12 ou 13, **caractérisé en ce qu'**il comporte un calculateur configuré pour réaliser des étapes du procédé selon l'une quelconques des revendications 1 à 11.

**15.** Support d'enregistrement de données lisible par un calculateur, sur lequel est enregistré un programme informatique comprenant des moyens de codes de programme informatique de mise en oeuvre des étapes d'un procédé selon l'une des revendications 1 à 11.

**Patentansprüche**

**1.** Verfahren zur Energieverwaltung, umfassend:

- einen Schritt zur Rückgewinnung (E1) einer elektrischen Energie, die aus einer Energiequelle (1), insbesondere aus einer erneuerbaren Energiequelle, stammt,
- einen Schritt zur Verteilung (E2) der rückgewonnenen elektrischen Energie, der konfiguriert ist, um derart gesteuert zu werden, um:

  ◦ in einer ersten Konfiguration mindestens einen Teil der rückgewonnenen elektrischen Energie in ein Stromnetz (2) einzuspeisen,
  ◦ in einer zweiten Konfiguration mindestens einen Teil der rückgewonnenen elektrischen Energie in ein Verarbeitungssystem (3) einzuspeisen, das derart konfiguriert ist, um sie in einem Behälter (4) zu speichern,

**dadurch gekennzeichnet, dass** es einen Schritt zum Steuern (E3) der Verteilung der elektrischen Energie (E2), der einen Schritt zum Bestimmen eines Speicherzustands des Behälters (4) und einen Schritt zum Bestimmen einer Bereitstellungsfrist aufweist, die das Bereitstellen von mindestens einem vorbestimmten Teil des Inhalts des Behälters (4) bewirkt, wobei der Schritt des Steuerns das Einspeisen von Elektrizität in das Stromnetz (2) und/oder in das Verarbeitungssystem (3) ausgehend von diesen Bestimmungen eines Speicherzustandes des Behälters (4) und einer Bereitstellungsfrist dosiert.

2. Verfahren nach Anspruch 1, **dadurch gekennzeichnet, dass** es einen Schritt des Umwandelns (E4) von mindestens einem Teil der elektrischen Energie, die in das Verarbeitungssystem (3) eingespeist wird, in ein Produkt, das in dem Behälter (4) zu speichern ist, aufweist und dadurch, dass es einen Schritt des Speicherns (E5) des Produktes in dem Speicher (4) aufweist.

3. Verfahren nach Anspruch 2, **dadurch gekennzeichnet, dass** der Schritt des Umwandelns (E4) einen Schritt der Stromversorgung eines Elektrolyseurs (6) des Verarbeitungssystems (3) durch die gesamte oder einen Teil der elektrischen Energie, die in das Verarbeitungssystem (3) eingespeist wird, derart aufweist, um das Produkt zu erzeugen, das Wasserstoff umfasst.

4. Verfahren nach einem der Ansprüche 1 bis 3, **dadurch gekennzeichnet, dass** der Schritt des Steuerns (E3) einen Schritt des Bestimmens von Verteilungseinschränkungen der Energie auf dem Stromnetz (2) aufweist.

5. Verfahren nach Anspruch 4, **dadurch gekennzeichnet, dass** der Schritt des Steuerns (E3) aufweist:

   - einen Schritt des Bestimmens eines ersten Indikators ausgehend von dem bestimmten Speicherzustand und der bestimmten Bereitstellungsfrist,
   - einen Schritt des Bestimmens eines zweiten Indikators ausgehend von den bestimmten Verteilungseinschränkungen,
   - einen Schritt des Vergleichens des ersten Indikators mit dem zweiten Indikator, und
   - einen Schritt des Bestimmens von Sollwerten zum Steuern der Verteilung der rückgewonnenen elektrischen Energie ausgehend von dem Ergebnis des Vergleichens.

6. Verfahren nach dem vorhergehenden Anspruch, **dadurch gekennzeichnet, dass** der erste Indikator gleich der folgenden Formel ist: $\sqrt{1-TTD^2} \times (1-SOC) + \left(1 - \sqrt{1-(1-TTD)^2}\right) \times SOC$, mit TTD, der bestimmten Bereitstellungsfrist, die zwischen dem Wert 0, wenn die Bereitstellungsfrist abgelaufen ist, und dem Wert 1 variiert, wenn der Behälter geleert oder ersetzt wird, und SOC, dem Speicherzustand des Speichers, der zwischen 0, wenn der Behälter leer ist, und 1, wenn der Speicher voll ist, variiert.

7. Verfahren nach einem der vorhergehenden Ansprüche, **dadurch gekennzeichnet, dass** der Schritt des Steuerns (E3) kontinuierlich derart durchgeführt wird, um das Funktionieren des Schritts zur Verteilung (E2) im Laufe der Zeit einzustellen.

8. Verfahren nach einem der vorhergehenden Ansprüche, **dadurch gekennzeichnet, dass** es einen Schritt des Speicherns in einer Batterie (7) von mindestens einem Teil der elektrischen Energie, die in das Verarbeitungssystem (3) eingespeist wird, aufweist.

9. Verfahren nach Anspruch 3 oder Anspruch 3 und einem der Ansprüche 4 bis 8, **dadurch gekennzeichnet, dass** es einen Schritt der Stromerzeugung durch eine Brennstoffzelle (8) unter Verwendung des Inhalts des Behälters (4) als Brennstoff aufweist.

10. Verfahren nach einem der vorhergehenden Ansprüche, **dadurch gekennzeichnet, dass** es einen Schritt des Bereitstellens (E6) des mindestens einen vorbestimmten Teils des Inhalts des Behälters (4) bei Ablauf der bestimmten Bereitstellungsfrist aufweist.

11. Verfahren nach einem der vorhergehenden Ansprüche, **dadurch gekennzeichnet, dass** der Schritt des Steuerns (E3) in Abhängigkeit von einer restlichen Zeit vor Ablauf der bestimmten Bereitstellungsfrist und des bestimmten Speicherzustands des Behälters (4) derart konfiguriert wird, dass das Auffüllen des Behälters (4) im Laufe der restlichen Zeit nach einer Methode durchgeführt wird, die ausgewählt wird aus: einem linearen Auffüllen, einem nichtlinearen Auffüllen, einem Auffüllen zu Beginn der restlichen Zeit, einem Auffüllen am Ende der restlichen Zeit oder einem intermittierenden Auffüllen.

**12.** Vorrichtung zur Energieverwaltung, umfassend:

- ein Element zur Rückgewinnung (9) einer elektrischen Energie, die aus einer Energiequelle (1), insbesondere aus einer erneuerbaren Energiequelle, stammt,
- ein Element zur Verteilung (10) der rückgewonnenen elektrischen Energie, das derart konfiguriert ist, um aufzuweisen:

◦ eine erste Konfiguration, in der mindestens ein Teil (En1) der rückgewonnenen elektrischen Energie (En) in ein Stromnetz (2) eingespeist wird,
◦ eine zweite Konfiguration, in der mindestens ein Teil (En2) der rückgewonnenen elektrischen Energie (En) in ein Verarbeitungssystem (3) eingespeist wird, das dazu bestimmt ist, sie in einem Speicherbehälter (4) zu speichern,

**dadurch gekennzeichnet, dass** sie ein Element zum Steuern (11) der Verteilung der elektrischen Energie aufweist, das ein Element zum Bestimmen eines Speicherzustands des Behälters und ein Element zum Bestimmen einer Bereitstellungsfrist aufweist, wodurch das Bereitstellen von mindestens einem Teil des Inhalts des Behälters bewirkt wird, wobei das Element zum Steuern (11) das Einspeisen von Elektrizität in das Stromnetz (2) und/oder in das Verarbeitungssystem (3) ausgehend von diesen Bestimmungen eines Speicherzustandes des Behälters (4) und einer Bereitstellungsfrist dosiert.

**13.** Vorrichtung nach dem vorhergehenden Anspruch, **dadurch gekennzeichnet, dass** das Verarbeitungssystem einen Elektrolyseur (6) aufweist, der durch die Energie, die in das Verarbeitungssystem (3) eingespeist wird, versorgt wird, um die eingespeiste Energie in Form von einem Produkt zu speichern, das Wasserstoff umfasst.

**14.** Vorrichtung nach einem der Ansprüche 12 oder 13, **dadurch gekennzeichnet, dass** es einen Computer aufweist, der konfiguriert ist, um Schritte des Verfahrens nach einem der Ansprüche 1 bis 11 durchzuführen.

**15.** Computerlesbares Aufzeichnungsmedium, auf dem ein Computerprogramm aufgezeichnet ist, das Computerprogrammcodemittel zum Umsetzen der Schritte eines Verfahrens nach einem der Ansprüche 1 bis 11 aufweist.

**Claims**

**1.** Energy management method comprising:

- a step of harvesting (E1) of an electrical energy from an energy source (1), notably from a renewable energy source,
- a step of distribution (E2) of the harvested electrical energy configured to be controlled in such a way as to:

◦ in a first configuration, inject at least a part of the harvested electrical energy into an electrical network (2),
◦ in a second configuration, inject at least a part of the harvested electrical energy into a processing system (3) configured in such a way as to store it in a tank (4),

**characterized in that** it comprises a step of control (E3) of the distribution of the electrical energy (E2) comprising a step of determination of a state of storage of the tank (4) and a step of determination of a time to delivery inducing the delivery of at least a predetermined part of the content of the tank (4), said step of control dosing the injection of electricity into the electrical network (2) and/or into the processing system (3) from these determined state of storage (4) and time to delivery data.

**2.** Method according to Claim 1, **characterized in that** it comprises a step of transformation (E4) of at least a part of the electrical energy injected into the processing system (3) into a product to be stored in the tank (4), and **in that** it comprises a step of storage (E5) of the product in the tank (4).

**3.** Method according to Claim 2, **characterized in that** the transformation step (E4) comprises a step of electrically powering an electrolyzer (6) of the processing system (3) by all or part of the electrical energy injected into the processing system (3) so as to generate the product comprising hydrogen.

4. Method according to one of Claims 1 to 3, **characterized in that** the control step (E3) comprises a step of determination of energy distribution constraints on the electrical network (2).

5. Method according to Claim 4, **characterized in that** the control step (E3) comprises:

- a step of determination of a first indicator from the determined state of storage and from the determined time to delivery,
- a step of determination of a second indicator from the determined distribution constraints,
- a step of comparison of the first indicator with the second indicator, and
- a step of determination of setpoints for the control of the distribution of the harvested electrical energy from the result of the comparison.

6. Method according to the preceding claim, **characterized in that** the first indicator is equal to the following formula:

$$\sqrt{1 - TTD^2} \times (1 - SOC) + \left(1 - \sqrt{1 - (1 - TTD)^2}\right) \times SOC$$ with TTD being the determined time to delivery varying between the value 0, when the time to delivery has expired, and the value 1 when the tank has just been emptied or replaced, and SOC being the state of storage of the tank varying between 0, when the tank is empty, and 1 when the tank is full.

7. Method according to any one of the preceding claims, **characterized in that** the control step (E3) is performed continuously so as to adjust the operation of the distribution step (E2) over time.

8. Method according to any one of the preceding claims, **characterized in that** it comprises a step of storage in a battery (7) of at least a part of the energy injected into the processing system (3).

9. Method according to Claim 3, or Claim 3 and any one of Claims 4 to 8, **characterized in that** it comprises a step of production of electricity by a fuel cell (8) using the content of the tank (4) as fuel.

10. Method according to any one of the preceding claims, **characterized in that** it comprises a step of delivery (E6) of said at least a predetermined part of the content of the tank (4) on expiry of said determined time to delivery.

11. Method according to any one of the preceding claims, **characterized in that**, based on a period remaining before the expiry of the determined time to delivery and on the determined state of storage of the tank (4), the control step (E3) is configured in such a way that the filling of the tank (4) is performed during the remaining period by a method chosen from: a linear filling, a nonlinear filling, a filling at the start of the remaining period, a filling at the end of the remaining period, or an intermittent filling.

12. Energy management device comprising:

- an element (9) for harvesting an electrical energy from an energy source (1), notably from a renewable energy source,
- an element (10) for distributing the harvested electrical energy configured in such a way as to exhibit:

   ○ a first configuration in which at least a part (En1) of the harvested electrical energy (En) is injected into an electrical network (2),
   ○ a second configuration in which at least a part (En2) of the harvested electrical energy (En) is injected into a processing system (3) intended to store it in a storage tank (4),

**characterized in that** it comprises an element (11) for controlling the distribution of the electrical energy comprising an element for determining a state of storage of the tank and an element for determining a time to delivery inducing the delivery of at least a part of the content of the tank, the element (11) for controlling dosing the injection of electricity into the electrical network (2) and/or into the processing system (3) from these determined state of storage (4) and time to delivery data.

13. Device according to the preceding claim, **characterized in that** the processing system comprises an electrolyzer (6) powered by the energy injected into said processing system (3) in order to store said injected energy in the form of a product comprising hydrogen.

14. Device according to one of Claims 12 and 13, **characterized in that** it comprises a computer configured to perform steps of the method according to any one of Claims 1 to 11.

15. Computer-readable data storage medium, on which is stored a computer program comprising computer program code means for implementing steps of a method according to one of Claims 1 to 11.

E1 — Récupération

E3 — Pilotage

E2 — Distribution

E4 — Transformation

E5 — Stockage

E6 — Livraison

FIG.1

1

5

En1

2

En2

7

6

3

4

8

FIG.2

FIG.3

FIG.4

FIG.5

**RÉFÉRENCES CITÉES DANS LA DESCRIPTION**

**Documents brevets cités dans la description**

- US 7444189 B

- US 2009048716 A